# EUROPÄISCHE PATENTSCHRIFT

(11) **EP 1 103 427 B1**
(45) Veröffentlichungstag und Bekanntmachung des Hinweises auf die Patenterteilung: **20.09.2006**
(21) Anmeldenummer: 00250393.6
(22) Anmeldetag: 22.11.2000
(51) Int. Cl.: B60R 16/02, H02J 7/14

(54) **Kraftfahrzeug-Bordnetz**
Vehicle on board network
Réseau de bord de véhicule

(30) Priorität: 23.11.1999 DE 19957477
(43) Veröffentlichungstag der Anmeldung: 30.05.2001
(73) Patentinhaber: Volkswagen Aktiengesellschaft, 38436 Wolfsburg (DE)
(72) Erfinder: Thorsten, Urlass, 38474 Tülau (DE); Logemann, Günther, 38518 Gifhorn (DE)
(74) Vertreter: Effert, Bressel und Kollegen

(56) Entgegenhaltungen:
- WO-A-99/36291
- DE-A- 4 326 527
- DE-A- 19 645 944
- DE-C- 4 110 240

## Beschreibung

Die Erfindung betrifft ein Kraftfahrzeug-Bordnetz gemäß dem Oberbegriff des Patentanspruchs 1.

Die bekannten Kraftfahrzeug-Bordnetze umfassen einen Starter, einen Generator und eine dem Starter zugeordnete Batterie. Dabei ist die Batterie über eine Starterleitung mit dem Starter und über eine Generatorleitung mit dem Generator verbunden. Dabei ist die Starterleitung permanent spannungsführend. In der Generatorleitung ist hingegen eine Sicherung angeordnet, die die Generatorleitung gegen Kurzschlüsse absichert. Die Absicherung liegt dabei in der Größenordnung von 250-300 A. Theoretisch könnten die Starter- und Generatorleitung miteinander verbunden werden, so dass eine Leitungslänge eingespart werden würde. Dies ist jedoch in der Praxis nicht möglich, da in der Startphase auf der Starterleitung kurzzeitig Ströme von bis zu 1200 A fließen, so dass die Sicherung der Generatorleitung zerstört werden würde. Also müsste die Generatorsicherung beispielsweise in der Größenordnung von 1500-2000 A sein. Derartige Sicherungen existieren zur Zeit jedoch nicht. Darüber hinaus würde eine derartig hohe Absicherung nicht mehr einen zuverlässigen Schutz gegen Kurzschlüsse darstellen. Aus diesem Grund müssen Starter- und Generatorleitung separat ausgebildet werden. Solange Batterie, Generator und Starter in unmittelbarer Nähe zueinander angeordnet sind, sind die Leitungslängen für die Starter- und Generatorleitung entsprechend kurz. Dies ist jedoch aufgrund des begrenzten Bauraums in modernen Kraftfahrzeugen nicht mehr gewährleistet. Mit zunehmender Entfernung der Batterie von Starter und Generator nimmt jedoch die Leitungslänge um das Doppelte zu, was neben den Materialkosten auch zu einem höheren Gewicht des Kraftfahrzeuges führt.

Aus der WO 99/36 29 01 A1 ist ein Kraftfahrzeugbordnetz mit zwei Batterien bekannt, wobei die eine Batterie zur Versorgung eines Hochstromverbrauchers, wie beispielsweise einen Heizwiderstand, dient, wohingegen die andere Batterie zur Bestromung des Starters bzw. Anlassers dient.

Aus der DE 196 45 944 A1 ist ein Steuergerät für ein Bordnetz mit wenigstens zwei von einem Generator aufladbaren Batterien bekannt, die zur Versorgung verschiedener Verbraucher dienen. Dieses Steuergerät liegt zwischen den beiden Batterien und umfasst ein Versorgungsnetzteil, einen busfähigen Mikrocomputer, einen Gleichspannungswandler und eine kurzschlusssichere Endstufe. Dabei ist die eine Batterie dem Starter und die andere Batterie dem Generator zugeordnet.

Der Erfindung liegt daher das technische Problem zugrunde, ein Kraftfahrzeug-Bordnetz zu schaffen, das bei einer umfassenden Kurzschlusssicherheit mit geringem Leitungsaufwand auskommt.

Die Lösung des technischen Problems ergibt sich durch die Gegenstände mit den Merkmalen der Patentansprüche 1 und 2. Weitere vorteilhafte Ausgestaltungen der Erfindung ergeben sich aus den Unteransprüchen.

Hierzu ist zwischen dem Starter und der Batterie ein Relais oder eine elektronische Polklemme angeordnet, der eine betriebsphasenabhängige Kurzschlusserkennung zugeordnet ist, und der Generator ist zwischen dem Starter und dem Relais bzw. der elektronischen Polklemme mit der Starterleitung verbunden. Dadurch wird im Wesentlichen die Generatorleitung eingespart, wobei die Absicherung über die betriebsphasenabhängige Kurzschlusserkennung erfolgt.

In einer ersten Ausführungsform wird hierzu die interne Stromüberwachung der elektronischen Polklemme ausgenutzt. Dabei ist die elektronische Polklemme außer im Stand stets geschlossen und der Strom über die Polklemme wird betriebsphasenabhängig ausgewertet. Ergibt diese Auswertung einen unzulässig hohen Strom, so sperrt die Polklemme und schaltet die Starterleitung spannungslos. Dabei werden die drei Betriebszustände "Fahrzeugstilistand", "Startphase" und "erregter Generator" unterschieden, wobei im Betriebszustand "Fahrzeugstillstand" die elektronische Polklemme gesperrt bzw. das Relais geöffnet ist und in den Betriebszuständen "Startphase" und "erregter Generator" die elektronische Polklemme durchgeschaltet bzw. das Relais geschlossen ist und eine interne Strommessung erfolgt, wobei die Stromstärke bei der auf Kurzschluss erkannt und die elektronische Polklemme gesperrt bzw. das Relais geöffnet wird im Betriebszustand "Startphase" größer als im Betriebszustand "erregter Generator" ist. Die Auswertung kann dabei sehr einfach mittels der vorhandenen Informationen erfolgen, wozu beispielsweise die Signale der Klemme 50 und 15 ausgewertet werden. Sind diese beispielsweise beide im High-Zustand, so bedeutet dies einen Startversuch, so dass kurzzeitig sehr hohe Stromstärken zulässig sind. Ist hingegen Klemme 50 im Low-Zustand bzw. wird eine aktive Generatorerregung L=1 erfasst, so wird die zulässige Stromstärke reduziert.

In einer alternativen Ausführungsform wird die interne Kurzschlusserkennung der elektronischen Polklemme auf die Startphase reduziert und parallel zur elektronischen Polklemme eine Sicherung für den Generator angeordnet. In diesem Fall wird die elektronische Polklemme nur in der Startphase kurzzeitig durchgeschaltet und ist ansonsten offen. Dadurch stellt sich ein Strompfad vom Generator über die Sicherung zur Batterie ein, der bei unzulässig hohen Strömen durch die Sicherung unterbrochen wird.

Die Erfindung wird nachfolgend anhand eines bevorzugten Ausführungsbeispieles näher erläutert. Die Fig. zeigen:
- Fig. 1: ein schematischer Schaltplan eines Kraftfahrzeug-Bordnetzes mit interner Kurzschlusserkennung,
- Fig. 2: ein schematischer Schaltplan eines Kraftfahrzeug-Bordnetzes mit paralleler Sicherung und
- Fig. 3: ein schematischer Schaltplan eines Kraftfahrzeug-Bordnetzes mit separater Starter- und Generatorleitung (Stand der Technik).

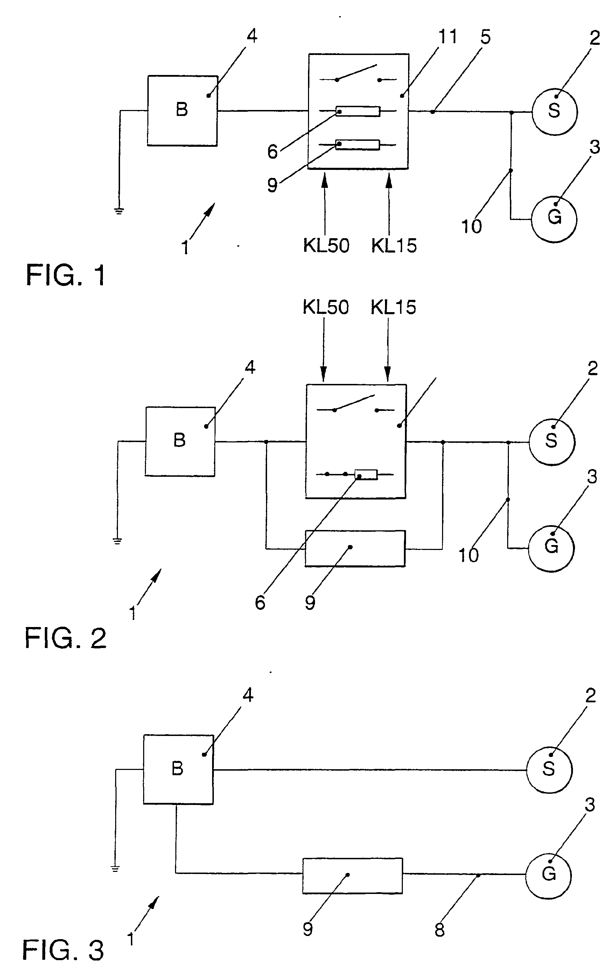

In der Fig. 3 ist schematisch ein Kraftfahrzeug-Bordnetz 1 gemäß dem Stand der Technik dargestellt. Das Kraftfahrzeug-Bordnetz 1 umfasst einen Starter 2, einen Generator 3 und eine Batterie 4. Der Starter 2 ist über eine Starterleitung 5 mit der Batterie 4 verbunden. Der Generator 3 ist über eine Generatorleitung 8 und eine Sicherung 9 mit der Batterie 4 verbunden,wobei die Sicherung 9 für niedrige zulässige Stromstärken in der Betriebsphase mit aktivem Generator 3 ausgelegt ist.

In der Fig. 1 ist schematisch das erfindungsgemäße Kraftfahrzeug-Bordnetz 1 dargestellt. Dabei ist der Generator 3 über eine Brücke 10 in unmittelbarer Nähe des Starters 2 mit der Starterleitung 5 verbunden. Zwischen dem Starter 2 und der Batterie 4 ist ein Relais oder eine elektronische Polklemme 11 mit betriebsphasenabhängiger Kurzschlußstromerkennung angeordnet. Diese interne Kurzschlußstromerkennung beruht auf einer internen Strommessung und Auswertung externer Signale, nämlich der Klemme 50 und 15. Dabei weist die elektronische Polklemme 11 drei Betriebszustände auf, die schematisch in die Darstellung der elektronischen Polklemme 11 eingezeichnet sind.

Im Stillstand ist die elektronische Polklemme 11 gesperrt, was durch einen geöffneten Schalter symbolisiert ist. Dadurch ist die Starterleitung 5 spannungslos geschaltet, so daß ein Kurzschluß auf der Starterleitung 5 keine Gefahrenquelle darstellen kann.

In der Startphase, also bei gleichzeitigem Vorhandensein eines Signals an der Klemme 50 und 15, wird die elektronische Polklemme 11 durchgeschaltet und der Strom von der Batterie 4 durch die elektronische Polklemme 11 gemessen. Erfaßt dabei die interne Strommessung beispielsweise Stromstärken von größer 1800-2000 A, so wird dies als Kurzschluß auf der Starterleitung 5 bewertet und die elektronische Polklemme 11 sperrt, so daß die Starterleitung 5 spannungslos geschaltet wird. Bei zulässigen Stromstärken wird der Starter bestromt. In dieser Startphase verhält sich die elektronische Polklemme 11 wie eine Sicherung 6 für die Starterleitung. Nach erfolgreichem Start spurt der Starter aus und ist wieder elektrisch entkoppelt und der Generator 3 ist erregt. Die elektronische Polklemme 11 ist weiterhin durchgeschaltet, wobei aufgrund der Potentialdifferenz zwischen den 14,4 V Generatorspannung den maximal 12 V Batteriespannung im Regelfall ein gerichteter Stromfluß vom Generator 3 über die elektronische Polklemme 11 stattfindet. Dabei wird wieder die durch die elektronische Polklemme 11 fließende Stromstärke erfaßt, wobei in der Betriebsphase mit erregtem Generator 3 die zulässige Stromstärke in der Größenordnung von beispielsweise 250 A liegt. Dieser Betriebszustand ist durch die Sicherung 9 der Generatorleitung symbolisiert. Kommt es nun während dieser Betriebsphase zu einem Kurzschluß auf der Starterleitung 5, so liegt an dem Kurzschlußpunkt das Bezugspotential von 0 V an. Dies wird vom Generator 3 erfaßt, der sich daraufhin abschaltet. Des weiteren fließt kurzzeitig ein Strom von der Batterie 4 durch die elektronische Polklemme 11 zum Kurzschlußpunkt. Diese Stromstärke ist jedoch erheblich größer als beispielsweise 250 A. Die elektronische Polklemme 11 erfaßt dies und sperrt, so daß die Starterleitung 5 wieder spannungslos ist. Die Betriebsphase mit erregtem Generator 3 wird dabei beispielsweise an dem Low-Zustand an Klemme 50 oder an dem Generatorsignal L=1 erkannt.

In der Fig. 2 ist eine alternative Ausführungsform dargestellt. Dabei ist eine Sicherung 9 parallel zur elektronischen Polklemme 11 geschaltet. Im Gegensatz zum Ausführungsbeispiel gemäß Fig. 1 ist hier die Starterleitung 5 im Stillstand zwar nicht spannungslos, aber dennoch über die Sicherung 9 abgesichert. Tritt während des Stillstandes ein Kurzschluß auf der Starterleitung 5 auf, so führt dies zu einem Stromfluß von der Batterie 4 über die Sicherung 9 , die nur für geringe Stromstärken ausgelegt ist und auslöst. Über die ausgelöste Sicherung 9 und die gesperrte elektronische Polklemme 11 ist dann die Starterleitung 5 spannungslos. In der Startphase, also Klemme 50 = Klemme 15 = 1 wird die Sicherung 9 durch die durchgeschaltete elektronische Polklemme 11 "kurzgeschlossen", was symbolisch durch den geschlossenen Schalter mit nachgeordneter Sicherung 6 symbolisiert ist. Die Kurzschlußerkennung erfolgt dabei wieder intern in der elektronischen Polklemme 11, die bei einem zu hohen Startstrom aufgrund eines Kurzschlusses öffnet. Der dann kurzzeitig über die Sicherung 9 fließende Startstrom löst dann die Sicherung 9 aus, so daß dann die Starterleitung 5 wieder spannungslos ist.

## Patentansprüche

1. Kraftfahrzeug-Bordnetz, umfassend einen Starter, einen Generator und mindestens eine den Starter mit Spannung versorgende Batterie, bei dem der Generator mit der Batterie verbunden ist, wobei die Leitung gegen Kurzschlüsse gesichert ist,
**dadurch gekennzeichnet, dass**
zwischen dem Starter (2) und der Batterie (4) ein Relais oder eine elektronische Polklemme (11) mit Kurzschlusserkennung angeordnet ist und der Generator (3) zwischen dem Relais oder der elektronischen Polklemme (11) und dem Starter (2) mit der Starterleitung (5) verbunden ist, wobei die drei Betriebszustände "Fahrzeugstillstand", "Startphase" und "erregter Generator" unterschieden werden, wobei im Betriebszustand "Fahrzeugstillstand" die elektronische Polklemme (11) gesperrt bzw. das Relais geöffnet ist und in den Betriebszuständen "Startphase" und "erregter Generator" die elektronische Polklemme (11) durchgeschaltet bzw. das Relais geschlossen ist und eine interne Strommessung erfolgt, wobei die Stromstärke bei der auf Kurzschluss erkannt und die elektronische Polklemme gesperrt bzw. das Relais geöffnet wird im Betriebszustand "Startphase" größer als im Betriebszustand "erregter Generator" ist.

2. Kraftfahrzeug-Bordnetz, umfassend einen Starter, einen Generator und mindestens eine den Starter mit Spannung versorgende Batterie, bei dem der Generator mit der Batterie verbunden ist, wobei die Leitung gegen Kurzschlüsse gesichert ist,
**dadurch gekennzeichnet, dass**
zwischen dem Starter (2) und der Batterie (4) ein Relais oder eine elektronische Polklemme (11) mit Kurzschlusserkennung angeordnet ist und der Generator (3) zwischen dem Relais oder der elektronischen Polklemme (11) und dem Starter (2) mit der Starterleitung (5) verbunden ist, wobei parallel zum Relais oder zur elektronischen Polklemme (11) eine Sicherung (9) angeordnet ist, wobei das Relais oder die elektronische Polklemme (11) nur in der Startphase geschlossen oder durchgeschaltet ist und eine interne Strommessung erfolgt, wobei bei Erfassung eines zu hohen Startstromes aufgrund eines Kurzschlusses das Relais öffnet bzw. die elektronische Polklemme (11) sperrt.

3. Kraftfahrzeug-Bordnetz nach Anspruch 1 oder 2, **dadurch gekennzeichnet, dass** der internen Kurzschlusserkennung des Relais oder der elektronischen Polklemme (11) die Signale der Klemme 50 und Klemme 15 oder ein Generatorerregungssignal (L) zuführbar sind.

4. Kraftfahrzeug-Bordnetz nach einem der vorangegangenen Ansprüche, **dadurch gekennzeichnet, dass** die elektronische Polklemme (11) als Leistungs-MOSFET ausgebildet ist.

## Claims

1. Motor-vehicle electrical system comprising a starter, a generator and at least one battery which supplies the starter with voltage, in which the generator is connected to the battery, with the line being protected against short circuits,
**characterized in that**
a relay or an electronic pole terminal (11) with short-circuit identification means is arranged between the starter (2) and the battery (4), and the generator (3) is connected to the starter line (5) between the relay or the electronic pole terminal (11) and the starter (2), with a distinction being drawn between the three operating states "vehicle at a standstill", "start phase" and "excited generator", with the electronic pole terminal (11) being blocked or the relay being open in the "vehicle at a standstill" operating state, and the electronic pole terminal (11) being connected or the relay being closed and internal current measurement being performed in the "start phase" and "excited generator" operating states, with the current intensity at which a short circuit is identified and the electronic pole terminal is blocked or the relay is open being greater in the "start phase" operating state than in the "excited generator" operating state.

2. Motor-vehicle electrical system comprising a starter, a generator and at least one battery which supplies the starter with voltage, in which the generator is connected to the battery, with the line being protected against short circuits,
**characterized in that**
a relay or an electronic pole terminal (11) with short-circuit identification means is arranged between the starter (2) and the battery (4), and the generator (3) is connected to the starter line (5) between the relay or the electronic pole terminal (11) and the starter (2), with a fuse (9) being arranged parallel to the relay or to the electronic pole terminal (11), with the relay being closed or the electronic pole terminal (11) being connected and internal current measurement being performed only in the start phase, with the relay opening or the electronic pole terminal (11) being blocked when an excessively high starting current on account of a short circuit is detected.

3. Motor-vehicle electrical system according to Claim 1 or 2, **characterized in that** the signals from the terminal 50 and the terminal 15 or a generator excitation signal (L) can be supplied to the internal short-circuit identification means of the relay or of the electronic pole terminal (11).

4. Motor-vehicle electrical system according to one of the preceding claims, **characterized in that** the electronic pole terminal (11) is in the form of a power MOSFET.

## Revendications

1. Réseau de bord de véhicule automobile comprenant un démarreur, un alternateur et au moins une batterie alimentant l'alternateur en tension, avec lequel l'alternateur est reliée avec la batterie, la ligne étant protégée contre les courts-circuits, **caractérisé en ce qu'**entre le démarreur (2) et la batterie (4) est disposé un relais ou une borne polaire électronique (11) avec détection de court-circuit et l'alternateur (3) est relié entre le relais ou la borne polaire électronique (11) et le démarreur (2) avec la ligne de démarreur (5), les trois états de fonctionnement « arrêt du véhicule », « phase de démarrage » et « alternateur excité » étant différents, la borne polaire électronique (11) étant bloquée ou le relais étant ouvert dans l'état de fonctionnement « arrêt du véhicule » et, dans les états de fonctionnement « phase de démarrage » et « alternateur excité », la borne polaire électronique (11) étant passante ou le relais étant fermé et une mesure interne du courant ayant lieu, l'intensité du courant dans l'état de fonctionnement « phase de démarrage », dans lequel un court-circuit est détecté et où la borne polaire électronique est bloquée ou le relais ouvert, étant supérieure à celle dans l'état de fonctionnement « alternateur excité ».

2. Réseau de bord de véhicule automobile comprenant un démarreur, un alternateur et au moins une batterie alimentant l'alternateur en tension, avec lequel l'alternateur est reliée avec la batterie, la ligne étant protégée contre les courts-circuits, **caractérisé en ce qu'**entre le démarreur (2) et la batterie (4) est disposé un relais ou une borne polaire électronique (11) avec détection de court-circuit et l'alternateur (3) est relié entre le relais ou la borne polaire électronique (11) et le démarreur (2) avec la ligne de démarreur (5), un fusible (9) étant disposé en parallèle avec le relais ou la borne polaire électronique (11), le relais ou la borne polaire électronique (11) n'étant fermé ou passante que dans la phase de démarrage et une mesure interne du courant ayant lieu, le relais s'ouvrant ou la borne polaire électronique (11) se bloquant en cas de détection d'un courant de démarrage trop élevé en raison d'un court-circuit.

3. Réseau de bord de véhicule automobile selon la revendication 1 ou 2, **caractérisé en ce que** les signaux de la borne 50 et de la borne 15 ou un signal d'excitation de l'alternateur (L) peuvent être acheminés à la détection interne de court-circuit du relais ou de la borne polaire électronique (11).

4. Réseau de bord de véhicule automobile selon l'une des revendications précédentes, **caractérisé en ce que** la borne polaire électronique (11) est réalisée sous la forme d'un MOSFET de puissance.
